# EUROPEAN PATENT APPLICATION

(11) **EP 4 790 116 A1**
(43) Date of publication of application: **12.08.2026**
(21) Application number: 26157723.3
(22) Date of filing: 11.02.2026
(51) Int. Cl.: C09J 133/20, C08L 93/04, C08K 5/378, C08K 5/5455, C08K 5/053, C09J 155/02, C08F 220/44

(54) **MULTIFUNCTIONAL FLOOR ADHESIVE**

(30) Priority: 11.02.2025 BE 202505076
(71) Applicant: DL Chemicals Detaellenaere-Loosvelt N.V., 8793 Waregem (BE)
(72) Inventor: FOURNEAU, Bart, 8793 Waregem (BE)
(74) Representative: Brantsandpatents bv

(57) **Abstract**

The present invention relates to an adhesive for bonding a floor covering. This adhesive comprises, inter alia, one or more bonding promoters, comprising a triethylene glycol-esterified rosin resin, in a concentration between 10 wt% and 30 wt%, one or more adhesion promoters, comprising an acrylonitrile copolymer, in a concentration between 20 wt% and 50 wt%, and one or more open time extenders in a concentration between 1 wt% and 5 wt%. The floor adhesive has, when applied to a substrate in a thickness of 0.1 mm to 2 mm, an open time at 23°C and 50% relative humidity of between 30 minutes and 60 minutes, measured in accordance with EN 14293.

## Description

### TECHNICAL FIELD

The invention relates to an adhesive, more particularly an adhesive for bonding a floor covering.

### PRIOR ART

The prior art in the field of floor adhesives has a number of limitations that can in practice lead to considerable challenges during the installation of floor coverings. An important problem is the lack of universality of many floor adhesives. Existing products are often specifically designed for a particular type of substrate, such as absorbent substrates (concrete, wood) or non-absorbent surfaces (tiles, metal). This gives rise to the necessity of keeping multiple types of adhesive in stock and making the correct choice for each project. This not only increases costs and logistical complexity, but can also lead to errors when an adhesive is used that is not optimally suited for a particular substrate.

Furthermore, many existing floor adhesives are not compatible with a wide range of floor coverings. Some adhesives work well with elastic materials such as PVC or rubber, but perform less well with hard coverings such as laminate or ceramic tiles. This limitation can lead to adhesion problems, such as insufficient strength or premature failure of the bond, particularly in situations where the floor is exposed to mechanical load or thermal expansion.

Another problem in the current technology is the sensitivity to environmental conditions. Many floor adhesives are strongly dependent on specific application conditions, such as temperature and relative humidity, in order to deliver optimal performance. This can complicate installation in spaces with varying climatic conditions or in projects where strict time schedules are required. Moreover, an insufficiently matched open time can lead to problems during installation, such as premature curing of the adhesive or insufficient bonding.

The durability and environmental friendliness of existing floor adhesives also frequently leave much to be desired. Some formulations contain volatile organic compounds (VOCs) in concentrations that do not comply with current stricter regulations or that cause a negative effect on indoor air quality. This can be particularly problematic in sensitive environments such as residences, schools, and hospitals.

The present invention aims to provide a solution to at least some of the above-mentioned problems.

### SUMMARY OF THE INVENTION

The invention relates to an adhesive for bonding floors according to claim 1. The adhesive is universal in use and can be used for bonding a wide range of floor coverings to various substrates. Furthermore, the open time of the adhesive is optimized to improve the use of the adhesive. Further preferred embodiments are described in claims 2 to 10.

In a second and third aspect, the invention relates to a method of use of the adhesive according to claims 11 to 13, and a kit according to claims 14 and 15.

### DETAILED DESCRIPTION

In a first aspect, the present invention relates to an adhesive for bonding a floor covering. This adhesive comprises, inter alia, one or more bonding promoters, comprising a triethylene glycol-esterified rosin resin, in a concentration between 10 wt% and 30 wt%, one or more adhesion promoters, comprising an acrylonitrile copolymer, in a concentration between 20 wt% and 50 wt%, and one or more open time extenders in a concentration between 1 wt% and 5 wt%. The floor adhesive has, when applied to a substrate in a thickness of 0.1 mm to 2 mm, an open time at 23°C and 50% relative humidity of between 30 minutes and 60 minutes, measured in accordance with EN14293.

Floor adhesive is an essential component in the installation of floor coverings and plays an important role in ensuring a durable adhesion between the floor covering and the substrate. These adhesives are developed to function effectively under diverse conditions, wherein their mechanical and chemical properties contribute to a strong and long-lasting bond. The choice of a suitable floor adhesive depends on various factors, such as the type of floor covering, the nature of the substrate, and the specific use requirements, including load conditions and exposure to moisture or temperature variations.

Floor adhesives must be resistant to environmental factors such as fluctuations in temperature and mechanical loading due to daily use. This requires a composition that not only provides an optimal balance between strength and flexibility, but also guarantees long-lasting stability, even under challenging conditions. By combining such properties, floor adhesives can considerably improve the reliability and service life of floor covering systems. Furthermore, the composition of the adhesive plays an important role in processing efficiency, wherein ease of application and rapid curing are essential for cost-effective installation.

The present invention is directed at addressing existing limitations of conventional floor adhesives, with the aim of offering improved performance and a broader field of application. A particular feature of the presented adhesive is its versatility, rendering it suitable for a wide range of floor coverings and substrates.

In one embodiment, the composition comprises bonding promoters. These substances are added to improve the initial and long-term adhesion of the adhesive to both the floor covering and the substrate. They act as a bridge between the adhesive and the materials being bonded, particularly in situations where the surfaces differ greatly from one another in terms of chemical composition or physical properties. As a result, bonding promoters not only increase the strength of the bond, but also contribute to the durability and stability of the adhesion under various conditions of use.

In floor adhesives, bonding promoters are specifically employed to address challenges such as porous substrates, smooth surfaces, or the presence of contaminants that may impede adhesion. They act by improving the wetting of the substrate, enabling the adhesive to spread more effectively and to create a larger contact area. Furthermore, they promote the chemical interaction between the adhesive and the surfaces, such as the formation of covalent bonds, hydrogen bonds, or Van der Waals forces. This ensures a stronger and more uniform adhesion.

Various chemical substances can serve as bonding promoters, depending on the specific application and the type of adhesive. A commonly used category is resins, such as rosin (resin from pine trees) and derivatives thereof, for example triethylene glycol-esterified rosin resin. These resins provide excellent adhesion to various substrates and improve tack, particularly on floors with smooth or low-surface-energy surfaces such as PVC or linoleum. Other commonly used substances are functional polymers, such as acrylates, polyurethanes, and silicon-containing compounds. These substances combine chemical flexibility with strength, making them suitable for a wide range of substrates and loads.

In one embodiment, the bonding promoters are selected from the group of, but not limited to, rosin, triethylene glycol-esterified rosin resin, polyvinyl alcohol, polyvinylpyrrolidone, polymethacrylate, acrylates, acrylonitrile copolymer, polymethyl methacrylate, epoxy resins, urethane resins, silicone compounds, silane coupling agents, siloxanes, aluminum salts, zinc salts, calcium salts, titanates, zirconates, acetoacetates, maleic acid copolymers, butyl acrylate, styrene-acrylate copolymers, polycarbonate, polyamide, polyurethane, hydroxyl-terminated polybutadiene, glycidyl methacrylate, polyether polyols, phenolic resins, resorcinol resins, ethyl cellulose, methyl cellulose, carboxymethyl cellulose, polydimethylsiloxane, aliphatic isocyanates, aromatic isocyanates, polyfunctional acrylates, polyfunctional methacrylates, phenylenediamine, dodecylbenzenesulfonic acid, acetoacetate polymers, epoxy functional silanes, enamine compounds, oxazolidine resins and/or combinations thereof. Preferably, the composition comprises at least triethylene glycol-esterified rosin resin. The composition comprises the one or more bonding promoters in a concentration between 5 wt% and 50 wt%, more preferably between 10 wt% and 40 wt%, even more preferably between 10 wt% and 30 wt%.

Furthermore, the composition according to an embodiment comprises adhesion promoters, chemical substances that are added to adhesives to improve the adhesion between the adhesive and the surface to be bonded. They play a role in increasing the bond strength, especially when bonding difficult-to-bond materials, such as certain plastics, metals, or other non-porous surfaces. Adhesion promoters act by promoting interactions between the adhesive and the surface, thereby enabling the adhesive to adhere more effectively and to form a durable bond.

The action of adhesion promoters is based on their ability to create a chemical or physical bond between the adhesive and the surface. This can be achieved, for example, by improving the wetting, which means that the adhesive spreads more effectively over the surface, thereby creating a larger contact area. Adhesion promoters can also reduce the surface tension of the material, making it easier for the adhesive to adhere. In addition, through chemical reactions, they can promote the formation of stronger, more durable bonds between the molecules of the adhesive and the surface, such as covalent or ionic bonds.

In an embodiment, the adhesion promoters are selected from the group of, but not limited to, silane coupling agents, γ-aminopropyltriethoxysilane, γ-methacryloxypropyltrimethoxysilane, 3-mercaptopropyltrimethoxysilane, vinyltriethoxysilane, 3-aminopropyltrimethoxysilane, 3-glycidoxypropyltrimethoxysilane, trimethoxyvinylsilane, butyltriethoxysilane, octyltriethoxysilane, polydimethylsiloxane, polymethyl methacrylate, acrylonitrile copolymer, polyvinylpyrrolidone, polyurethane, polyamide, polymaleic acid, polyvinyl alcohol, polyethylene glycol, epoxy groups, methacrylate groups, acrylic acid derivatives, polyisocyanates, aliphatic isocyanates, aromatic isocyanates, diamines, dodecylbenzenesulfonic acid, phosphoric acid derivatives, phenylenediamine, carboxymethyl cellulose, N-vinylpyrrolidone, polycarbonate, polymethylsiloxane, hexamethyldisiloxane, polyether polyols, resorcinol resins, glycidyl methacrylate, dodecyltrichlorosilane, methacrylate-functionalized polyethylene, trimethylsilane, urethane resins, epoxy functional silanes, aliphatic polyurethane, perfluoroalkylsilanes, and/or combinations thereof. In a preferred embodiment, the composition comprises at least acrylonitrile copolymer. In one embodiment, the composition comprises one or more adhesion promoters in an amount between 10 wt% and 50 wt%, more preferably between 20 wt% and 50 wt%.

Acrylonitrile copolymer is a widely used adhesion promoter that is added to adhesives to improve adhesion, particularly when bonding plastics and other difficult-to-bond surfaces. Acrylonitrile copolymer is a type of polymer obtained by the polymerization of acrylonitrile together with other monomers, such as butadiene or styrene. The copolymer structure allows the properties of the polymer to be adjusted in order to achieve better adhesion to a wide range of materials.

The addition of acrylonitrile to a copolymer provides increased polarity, which helps to improve adhesion to polar substrates such as metals, glass, and certain plastics. The polarity of acrylonitrile copolymer ensures that it readily interacts with the molecules on the surface of the material to be bonded, thereby generating strong adhesive forces. This makes acrylonitrile copolymer particularly effective for applications where strong adhesion is required, such as in the automotive industry or when bonding different layers of plastic materials.

In addition, acrylonitrile copolymer offers several important mechanical advantages to adhesives. The presence of acrylonitrile increases the chemical resistance and the durability of the adhesive bond, which is important for applications that are exposed to environmental factors such as moisture, temperature variations, and chemical substances. Acrylonitrile copolymer can also contribute to the flexibility of the adhesive, which is essential for applications where the substrate may expand or contract, such as in floor coverings or in outdoor environments.

The copolymer can be further adjusted by varying the ratio of acrylonitrile to other monomers, depending on the specific requirements of the application. For example, a higher content of acrylonitrile increases the polarity and the bond strength, while a higher content of butadiene can provide improved flexibility and impact resistance. The choice of the other monomers in the copolymer therefore influences the final performance of the adhesion promoter, which can be tailored to the specific properties of the materials to be bonded.

In an embodiment, the adhesive comprises one or more open time extenders (OTE). The open time of an adhesive is the period during which the adhesive, after application to a surface, can be worked or brought into contact with another material before the adhesive begins to cure or loses its tack. During this time, the adhesive is still tacky and the user can position, shift, or adjust the object to be bonded without loss of adhesion. The open time is of importance for many applications, as it increases working efficiency and flexibility, particularly in complex or time-consuming installations such as floors, tiles, or in the assembly of large surfaces.

The open time of an adhesive is influenced by various factors, including the composition of the adhesive, the ambient conditions such as temperature and humidity, and the nature of the material to be bonded. A longer open time offers the advantages of more working time and flexibility, but may also slow the curing rate, which is not desirable for applications that need to be finished quickly. It is therefore important to properly align the open time of the adhesive with the specific requirements of the application.

Open time extenders (OTE) are substances that are added to adhesives to extend the open time. These extenders retard the curing process of the adhesive without compromising the ultimate strength or performance of the bond. OTEs play a role in adhesives that must be applied in conditions where more time is required for applying or adjusting the bonded materials. They make it possible to process the adhesive more easily, in particular on large surfaces or when working with materials that are difficult to position.

The action of open time extenders is based on their ability to retard the rate of the chemical reactions that contribute to the curing process. In many cases, the curing of the adhesive depends on the reaction between the active components in the adhesive, such as the polymers and the crosslinkers. Open time extenders ensure that these reactions proceed in a controlled manner, whereby the adhesive retains its tack for longer before the curing process commences. This is particularly useful in applications where the adhesive is exposed to air or where conditions such as temperature and relative humidity vary.

There are various types of open time extenders, depending on the type of adhesive and the desired performance. Commonly used OTEs are solvents such as water, glycols, alcohols, or other diluents that reduce the viscosity of the adhesive while simultaneously retarding the evaporation of volatile substances. In addition, certain polymers and additives, such as plasticizers, may be used to extend the open time. These substances reduce the setting of the adhesive, so that the user has more time for positioning or adjusting the objects to be bonded.

In an embodiment, the OTEs are selected from the group of, but not limited to, water, ethylene glycol, propylene glycol, butylene glycol, diethylene glycol, glycerol, isopropyl alcohol, methanol, ethanol, butanol, pentanol, hexanol, octanol, dimethylformamide, acetone, tetrahydrofuran, dimethyl sulfoxide, 1,4-dioxane, ethyl acetate, n-butyl acetate, toluene, xylene, cyclohexane, N-methyl-2-pyrrolidone, glycol ether, polyethylene glycol, polypropylene glycol, plasticizers (such as dioctyl phthalate), polyvinyl alcohol, polyacrylate, cellulose derivatives, siloxanes, polyurethane, polyethylene glycol dimethyl ether. In an embodiment, the OTEs are present in a concentration between 0 wt% and 10 wt%, more preferably between 1 wt% and 7 wt%, even more preferably between 1 wt% and 5 wt%.

In an embodiment, the adhesive has an open time at 23°C and 50% relative humidity of between 10 minutes and 100 minutes, more preferably between 20 minutes and 80 minutes, even more preferably between 30 minutes and 60 minutes. The open time is measured in accordance with EN 923, which provides a standardized method for determining the time during which an adhesive retains its tack after application to a surface. EN 923 specifies the test conditions, wherein a controlled temperature of 23°C and a relative humidity of 50% are maintained, so that the open time can be established under standardized and reproducible conditions. This ensures that the measured open time is comparable with other products that undergo the same test, which guarantees the consistency and reliability of the results.

During the test, the adhesive is applied to a specific substrate, and the moment at which the adhesive loses its ability to hold an object (i.e., when the adhesive is no longer effective for bonding a surface) is documented. The open time plays a crucial role in the ease of use of the adhesive, as it determines the amount of time the user has to position or adjust materials before the adhesive begins to cure. An open time between 30 and 60 minutes provides sufficient scope for working with larger surfaces or for bonding objects that are more difficult to position, without the adhesive losing its effectiveness.

In an embodiment, the adhesive has a volatile organic compound (VOC) emission between 0 g/L and 100 g/L, more preferably between 0 g/L and 50 g/L. VOCs are organic substances that evaporate rapidly at room temperature and that often contribute to air pollution and harmful health impacts, such as respiratory problems or skin irritations. Limiting VOC emissions in adhesives is of great importance, especially in applications where the adhesive is used in indoor environments, such as in flooring, wall cladding, or furniture. Adhesives with a lower VOC emission help to improve indoor air quality and often comply with stricter regulations and environmental requirements, such as those laid down in European standards and legislation, including European Regulation 2004/42/EC, which sets limit values for the emission of VOCs in paint and adhesive products.

A VOC emission between 0 g/L and 50 g/L is considered very low and is desirable for applications where environmental friendliness and health are a priority. Limiting the VOC emission can contribute to a safer working environment for the user and a healthier indoor air quality for residents or employees. This is of particular importance in enclosed spaces where ventilation may be limited, such as during renovations or the installation of floor coverings in residences, schools, hospitals, and other public buildings.

The VOC is measured using the microchamber test or small chamber test, which is carried out in accordance with the standardized standard ISO 16000-9. In this test, the concentration of volatile organic compounds released by a sample of the product in a controlled environment is measured. The process begins with applying a representative sample of the adhesive to a test substrate or in a form that is suitable for the test chamber. The sample is then cured under controlled conditions, at 23°C and 50% relative humidity, to ensure that the product is in a representative state.

After curing, the sample is placed in a small, hermetically sealed measurement chamber, where temperature and humidity are precisely controlled to guarantee consistent test conditions. In the chamber, air is ventilated through the sample to simulate the emission of VOCs. The air in the measurement chamber is continuously monitored for the concentrations of the volatile organic compounds released from the sample, which can be done using detection methods such as gas chromatography (GC) coupled to mass spectrometry (MS), or photometric detection. These techniques enable the researchers to detect the specific types and concentrations of VOCs in the air.

In an embodiment, the adhesive comprises glycerin, a polyol that plays a role in the composition of adhesives. The adhesive may comprise glycerin in an amount between 0 wt% and 10 wt%, more preferably between 0 wt% and 7 wt%, even more preferably between 0 wt% and 5 wt%, even more preferably between 0 wt% and 3 wt%, most preferably between 0 wt% and 1 wt%. Glycerin, also known as glycerol, is a colorless, odorless, and viscous liquid that occurs naturally in fats and oils. It is added to the adhesive composition on account of its hygroscopic properties, meaning that it is capable of attracting and retaining water. This helps to improve the flexibility and the adhesion capacity of the adhesive, especially when it is exposed to varying humidity conditions. Glycerin contributes to the stability of the adhesive, as it can reduce the viscosity, thereby facilitating the application of the adhesive, particularly on larger surfaces or in applications requiring a uniform distribution.

In addition to its influence on the viscosity, glycerin also plays a role in extending the open time of the adhesive. The open time, which is the period during which the adhesive can be adjusted or repositioned before it begins to cure, is often influenced by the use of glycerin. This is because glycerin retards the evaporation of solvents or water in the adhesive, thereby allowing the adhesive to remain workable for a longer period before it cures. This may be of importance in applications wherein the user requires sufficient time to correctly position the materials before the adhesive begins to bond.

Furthermore, glycerin can improve the durability of the adhesive by virtue of its role as a plasticizer. It prevents the adhesive from drying out too quickly or becoming brittle, whereby the end product exhibits a higher degree of elasticity and resistance to cracking. This renders the adhesive more suitable for applications requiring a certain degree of movement or deformation, such as in the case of floors that are subject to loading or temperature changes.

Glycerin can also contribute to the environmental friendliness of the adhesive. As it is a relatively mild substance and is derived from renewable sources, it can reduce the ecological footprint of adhesive production compared to other, more harmful additives. Moreover, glycerin has the advantages of low volatility, which means that it can reduce the emission of volatile organic compounds (VOCs) into the air, which is beneficial for air quality, particularly in indoor environments.

In an embodiment, the adhesive comprises a mixture of fungicides at a concentration between 0.1 wt% and 1 wt%, more preferably between 0.1 wt% and 0.7 wt%, even more preferably between 0.1 wt% and 0.5 wt%. Fungicides are chemical substances that prevent or reduce the growth of fungi, which is of importance in applications wherein the adhesive is exposed to humid or moist environments. Not only can fungi affect the adhesive itself, but they can also damage the surfaces to which the adhesive has been applied, such as floors or wall coverings. By incorporating fungicides into the composition of the adhesive, the integrity of the adhesive and the surfaces bonded therewith can be maintained over an extended period of time.

The choice of the type of fungicide and the concentration of the mixture are important in order to find a balance between efficacy and safety. Fungicides must be sufficiently potent to inhibit fungal growth, while at the same time complying with the health and safety standards applicable to the user. Some fungicides can cause irritation upon contact with the skin or upon inhalation, therefore the use of these substances must be carefully regulated in order to comply with the applicable legislation and to ensure the safety of the end user.

An advantage of using a mixture of fungicides in the adhesive is that it increases the likelihood that the adhesive will be effective against various types of fungi. Fungi vary considerably in their structure and the manner in which they reproduce, therefore a combination of different active substances can provide broader protection than a single fungicide. This makes the adhesive more resistant to a broad range of fungal species, from common household molds to more resistant species that can grow in moist or outdoor environments.

In an embodiment, the fungicides are selected from the group of, but not limited to, 1,2-benzisothiazol-3(2H)-one, methylisothiazolinone, octylisothiazolinone, methylchloroisothiazolinone, 2-methyl-4-isothiazolin-3-one, 5-chloro-2-methyl-2H-isothiazole-3-one, 5-chloro-2-methyl-4-isothiazolin-3-one, 2-ethyl-2-methyl-4-isothiazolin-3-one, 4,5-dichloro-2-methyl-4-isothiazolin-3-one, 2-methyl-2H-isothiazole-3-one, 4-isothiazolin-3-one, 2,5-dimethyl-4-isothiazolin-3-one, 1,2-dimethyl-3(2H)-thiazole, copper salts, silver salts, thiabendazole, propiconazole, iprodione, tebuconazole, clotrimazole, ketoconazole, fenthion, carbendazim, benomyl, myclobutanil, pyraclostrobin, fludioxonil, dichlofluanid, dodecylbenzenesulfonic acid, methylisothiazolinone, chlorothalonil, azoxystrobin, cyproconazole, epoxiconazole, hexaconazole, triazole, azoxystrobin, metconazole, pentachlorophenol, bitertanol, and enilconazole. In a preferred embodiment, the adhesive comprises at least the fungicides 1,2-benzisothiazole-3(2H)-one, 5-chloro-2-methyl-2H-isothiazole-3-one and 2-methyl-2H-isothiazole-3-one in a ratio of 100:1:1.

In an embodiment, the adhesive comprises sodium polyacrylate at a concentration between 0 wt% and 10 wt%, more preferably between 0 wt% and 7 wt%, even more preferably between 0 wt% and 5 wt%, even more preferably between 0 wt% and 3 wt%, most preferably between 0 wt% and 1 wt%. Sodium polyacrylate is a watersoluble polymer that is used in various applications, including adhesives, owing to its versatile properties. It is known for its excellent capacity to absorb water and its ability to form viscous solutions. In adhesive compositions, sodium polyacrylate functions primarily as a thickening agent, stabilizer, and water retention agent, which contributes to the improved performance of the adhesive.

One of the most important functions of sodium polyacrylate in adhesives is improving the viscosity, which is essential for applying the adhesive to surfaces. It ensures that the adhesive can be applied easily to the substrate without flowing rapidly or drying out, which increases control and precision during application. This makes it particularly useful in applications where a thicker or more viscous product is required, such as when bonding floor coverings, wall coverings, or other materials that require a longer processing time.

In addition, sodium polyacrylate plays an important role in retaining water in the adhesive formulation. This is advantageous in situations where the adhesive is used on porous materials, such as wood or concrete, which can rapidly absorb moisture. The water is retained by the polymer, allowing the adhesive to remain moist for a longer period of time and providing a longer open time. This makes it possible to position and adjust the materials to be bonded for longer before the adhesive begins to bond, which significantly improves workability.

Sodium polyacrylate also offers advantages in terms of the durability of the adhesive. It increases the stability of the adhesive formulation by reducing the tendency of the other ingredients to separate or dry out. It helps to keep the adhesive smooth and uniform throughout the entire service life of the product, thereby maintaining performance even under various environmental conditions, such as changes in temperature or humidity.

In an embodiment, the adhesive composition comprises a mixture of calcium and magnesium carbonate, which together play a role in the formulation of the adhesive. These carbonates are often added as fillers, which contribute to both the mechanical properties and the workability of the adhesive. They not only provide structural benefits, but can also help to reduce the cost of the formulation by replacing more expensive active components.

Calcium carbonate, a widely used filler in adhesives, provides increased density and consistency in the adhesive. It contributes to improved stability and prevents the adhesive from becoming too fluid during storage or processing. Furthermore, calcium carbonate improves the adhesion properties on certain substrates, such as concrete, plaster or other porous materials, through its compatibility with alkaline surfaces.

Magnesium carbonate offers additional advantages through its specific properties. It is known for its ability to regulate moisture, which is important in adhesive systems that are exposed to varying humidity conditions. Magnesium carbonate can act as a buffer against moisture, rendering the adhesive less susceptible to drying out or excessive moisture absorption during and after application. This contributes to long-lasting adhesion and prevents the adhesive from losing its strength in humid environments.

The mixture of calcium and magnesium carbonate offers synergistic effects. Together, these components improve the rheological properties of the adhesive, such as the viscosity and the spreadability, enabling the adhesive to be applied more easily and consistently. In addition, the mixture contributes to improved durability, as it helps to stabilize the adhesive and render it resistant to temperature fluctuations and mechanical loads.

In an embodiment, the adhesive comprises a mixture of calcium-magnesium carbonate with a purity of at least 95%, preferably at least 99%, wherein the calcium oxide content is 30 to 35% and the magnesium oxide content is 20 to 30%. The adhesive may comprise the mixture in a concentration between 10 wt% and 90 wt%, more preferably between 20 wt% and 80 wt%, more preferably between 30 wt% and 70 wt%, even more preferably between 30 wt% and 60 wt%, even more preferably between 30 wt% and 50 wt%, most preferably between 30 wt% and 40 wt%.

In an embodiment, the adhesive comprises a surfactant, a surface tension-reducing substance that plays a crucial role in improving the performance and properties of the adhesive. Surfactants, also referred to as surface-active substances, are molecules with both hydrophilic (water-attracting) and hydrophobic (water-repelling) properties. As a result, they are able to optimize the interaction between the various components in the adhesive composition, leading to improved functionality and consistency of the end product.

One of the most important functions of a surfactant in an adhesive is improving the wetting properties. When applying the adhesive to a substrate, the surfactant helps to spread the adhesive evenly and to penetrate deeply into porous or irregular surfaces. This improves adhesion by increasing the contact area between the adhesive and the substrate. Surfactants are particularly useful in applications on difficult-to-wet substrates, such as plastic, metal or water-repellent coatings.

In addition, surfactants can act as emulsifiers in water-based adhesives. They stabilize the dispersion of hydrophobic and hydrophilic components, thereby keeping the composition homogeneous during storage and use. Without surfactants, these components would tend to demix, which would reduce the quality and performance of the adhesive. By increasing the stability, surfactants ensure that the adhesive performs consistently, regardless of the conditions.

Surfactants also play a role in improving the rheological properties of the adhesive. By influencing the viscosity and flow properties, they make the adhesive easier to apply, without it becoming too thin or too thick. This is particularly important in applications where a controlled and uniform application is required, such as with floor coverings or wall panels.

Furthermore, surfactants can contribute to the open time of the adhesive, the period during which the adhesive retains its tack before it begins to cure. This occurs because surfactants slow down the evaporation of water or solvents in the adhesive, which facilitates the workability and positioning of the materials. This provides the adhesive with greater flexibility during installation processes, particularly in large or complex projects.

In one embodiment, the surfactant is selected from the group of, but not limited to, sodium dodecyl sulfate, sodium laureth sulfate, sodium lauryl sulfate, alkylbenzene sulfonate, cetyltrimethylammonium bromide, stearyltrimethylammonium chloride, polyoxyethylene sorbitan monooleate (Tween 80), polyoxyethylene sorbitan monolaurate (Tween 20), sorbitan monostearate (Span 60), sodium salt of a maleic anhydride copolymer, sorbitan monooleate (Span 80), dioctyl sodium sulfosuccinate, cetyl alcohol ethoxylate, lauryl alcohol ethoxylate, octylphenol ethoxylate, nonylphenol ethoxylate, polyethylene glycol monostearate, polyethylene glycol distearate, lauryl glucoside, decyl glucoside, coco glucoside, caprylyl glycol, isopropyl myristate, isopropyl palmitate, methyl ester sulfonate, fatty acid methyl esters, sodium alkyl ethoxy sulfate, sodium cocoyl isethionate, alkyl polyglucosides, fatty alcohol ethoxylates, cetyl betaine, cocamidopropyl betaine, stearamidopropyl betaine, lauramidopropyl betaine, dimethyl dodecyl amine oxide, coco amine oxide, stearyl amine oxide, ethoxylated castor oil, ethoxylated tallow amine, lecithin, poloxamers, alkyl polyglycosides, polyethylene glycol ethers, trimethylolpropane ethoxylates, fatty acid ethoxylates, methyl glucose dioleate, ethoxylated lanolin alcohols, alkyl sulfate esters. In a preferred embodiment, the adhesive comprises at least sodium salt of a maleic anhydride copolymer, in a concentration between 0 wt% and 5 wt%, more preferably between 0 wt% and 4 wt%, even more preferably between 0 wt% and 3 wt%, even more preferably between 0 wt% and 2 wt%, most preferably between 0 wt% and 1 wt%.

In an embodiment, the adhesive comprises sodium hydroxide (NaOH), in a concentration that is carefully adjusted to maintain a pH value between 7 and 10, more preferably between 7 and 9, even more preferably between 7 and 8. Sodium hydroxide, a strong base, is added to regulate the pH of the adhesive composition, which is essential for optimizing the performance and stability of the adhesive. A pH in this specific range contributes to a balanced chemical environment, in which the various components of the adhesive can function effectively without undesired reactions or degradation.

A pH between 7 and 8 is slightly basic and offers several advantages in adhesive systems. First, it prevents an excessively acidic environment that could attack certain components, such as polymers or fillers. This is particularly important for adhesives that require long-term stability, such as floor adhesives that are exposed to varying environmental conditions over an extended period. A slightly basic pH also helps to minimize corrosion of metal substrates, which is important in applications where the adhesive is in direct contact with metal surfaces.

The concentration of NaOH is precisely determined to achieve an exact pH balance, without the adhesive becoming too corrosive or the mechanical properties of the composition being adversely affected. A carefully controlled amount of NaOH prevents, for example, the adhesive from curing too rapidly, which can reduce workability, or the open time from being limited, which is crucial for a correct placement and positioning of the floor covering.

In addition, sodium hydroxide can play a role in activating specific chemical reactions in the adhesive composition. It can accelerate or retard the reaction kinetics of crosslinkers or other chemical additives, depending on the formulation. This makes NaOH not only a pH regulator, but also a potential co-factor in optimizing the adhesive strength and durability of the adhesive.

An additional advantage of a pH between 7 and 8 is the compatibility with human exposure and application conditions. Adhesives with a neutral to slightly alkaline pH are generally less irritating to the skin and eyes, which increases safety and ease of use during the installation of floor coverings.

In an embodiment, the adhesive has a density between 1 g/ml and 1.5 g/ml, a parameter that has been carefully calibrated to optimize both the processability and the performance properties of the adhesive. The density of an adhesive plays an important role in various aspects of use and application, including the manner in which the adhesive spreads, adheres, and cures.

A density in this range provides a balance between fluidity and viscosity, which plays a role in uniform application. At a density around 1 g/ml, the adhesive is light and easy to apply, while a higher density, towards 1.5 g/ml, provides a more substantial and firm adhesive layer that is suitable for applications where additional adhesion and stability are required. This makes the adhesive suitable for a wide range of floor coverings, from lightweight materials such as vinyl and linoleum to heavier and more rigid options such as ceramic tiles or natural stone.

The density also influences the amount of adhesive consumed. A higher density may mean that less adhesive per square meter is required to achieve adequate adhesion, which promotes cost efficiency and material savings. At the same time, a well-chosen density contributes to the mechanical performance of the adhesive, such as the strength of the bond and the resistance to shear or compression under load.

In an embodiment, the adhesive is suitable for both absorbent and non-absorbent substrates, thereby covering a wide range of applications. This versatile character makes the adhesive ideal for situations in which different types of floor coverings and substrates are combined. By virtue of this universal suitability, the same adhesive can be used for a diverse range of materials, such as porous surfaces such as concrete, wood, and plaster, as well as non-porous surfaces such as ceramic, metal, and glass. This flexibility considerably simplifies the installation process and reduces the need to purchase or prepare multiple types of adhesive.

The suitability for absorbent substrates, such as concrete or wood, is made possible by a carefully chosen formulation. This formulation comprises, for example, specific bonding promoters and polymers that can penetrate deeply into the substrate and create a strong bond. For non-absorbent substrates, such as tiles or metal surfaces, the adhesive provides excellent surface adhesion without the need for a chemical reaction with the substrate. This is due to the presence of high-quality adhesion promoters and other specific additives designed to achieve a durable bond, regardless of the nature of the surface.

The multifunctional character of this adhesive makes it particularly valuable in modern applications where versatility is required. For example, in commercial spaces, where various floor coverings such as carpet, vinyl, and natural stone are frequently used within a single project, this adhesive can be seamlessly deployed for all substrates. Furthermore, the adhesive is suitable for residential applications, where a universal approach to floor coverings provides a practical solution for a wide range of materials in different rooms.

In a second aspect, the present invention relates to a use of an adhesive. This adhesive comprises, inter alia, one or more bonding promoters, comprising a triethylene glycol-esterified rosin resin, in a concentration between 10 wt% and 30 wt%, one or more adhesion promoters, comprising an acrylonitrile copolymer, in a concentration between 20 wt% and 50 wt%, and one or more open time extenders in a concentration between 1 wt% and 5 wt%. The floor adhesive has, when applied to a substrate in a thickness of 0.1 mm to 2 mm, an open time at 23°C and 50% relative humidity of between 30 minutes and 60 minutes, measured in accordance with EN 923.

In an embodiment, the adhesive is specifically applied for bonding horizontal flexible floor coverings, such as vinyl, linoleum, rubber, carpet, or other elastic materials. Such coverings are becoming increasingly popular due to their versatility, durability, and aesthetic possibilities in both residential and commercial spaces. The formulation of the adhesive has been carefully designed to meet the unique requirements of flexible floor coverings, wherein a strong and long-lasting bond is combined with sufficient flexibility to accommodate movement and thermal expansion of the material.

An important property of the adhesive is the ability to guarantee a uniform bond, even when the floor is exposed to daily loads such as foot traffic, heavy furniture, or rolling resistance from, for example, office chairs. Flexible floor coverings tend to move with loads or temperature fluctuations, and a suitable adhesive must be able to withstand these dynamic conditions without compromising the integrity of the bond. This is achieved by the use of advanced polymers and plasticizers that provide the necessary elasticity and durability.

The adhesive can be applied in a thin layer, ranging from 0.1 mm to 2 mm, depending on the specific covering and installation requirements. This thin yet effective layer not only provides a firm bond but also minimizes the risk of irregularities or air bubbles beneath the floor covering. Furthermore, the long open time, typically between 30 and 60 minutes under standard conditions, ensures that installers have sufficient time to accurately position and adjust the floor without the adhesive curing prematurely.

In addition, the adhesive is compatible with various substrates, including absorbent surfaces such as concrete or wood and non-absorbent substrates such as leveled cement floors or existing tiled floors. This versatility makes the adhesive ideal for use in a wide range of projects, from new construction to renovations, in which different substrates and floor coverings are combined. This universal character underlines the efficiency and user-friendliness of the adhesive.

In an embodiment, the adhesive as described above is used for bonding floor coverings selected from the group of, but not limited to, luxury vinyl tiles (LVT), semi-rigid vinyl floor tiles, homogeneous and/or heterogeneous PVC floor coverings, linoleum, carpet and/or cork, rubber floors, ceramic tiles, natural stone such as marble or granite, laminate, solid wood floors, engineered wood floors, bamboo floors, vinyl rolls, epoxy floors, poured floors, terrazzo, coconut mats, sisal, polyurethane floors, textile floor coverings, corkoleum, polyvinyl chloride floors, concrete-look floor coverings, asphalt floors, modular carpet, woven vinyl, moss floors, leather floors, sports floors, antistatic floors, floating floors, and/or combinations or hybrid forms thereof. In a preferred embodiment, the adhesive is used for bonding LVT, semi-rigid vinyl floor tiles, homogeneous and/or heterogeneous PVC floor covering, linoleum, carpet and/or cork.

In an embodiment, the adhesive as described above is specifically employed for floors with underfloor heating and/or floor cooling. This application requires an adhesive that is not only resistant to fluctuating temperatures, but also retains its bond strength under constant thermal load and cyclic temperature fluctuations. Underfloor heating systems typically operate at temperatures ranging from 20°C to 35°C, while floor cooling can cool the floor to temperatures around 15°C or lower. This imposes specific requirements on the chemical and mechanical properties of the adhesive.

The formulation of the adhesive is optimized to accommodate thermal expansion and contraction of both the floor covering and the substrate without stresses arising that may reduce the adhesion. This is made possible by the presence of flexible polymers and plasticizers that provide an elastic bond. As a result, the adhesive remains effective even when the floor heats up and cools down multiple times per day, as is customary in residential and commercial applications with climate control systems.

Furthermore, the adhesive is resistant to the increased humidity that sometimes accompanies underfloor heating and floor cooling systems. With floor cooling, condensation may occur on the substrate or in the immediate vicinity of the adhesive layer, while underfloor heating may promote the evaporation of moisture in the surrounding environment. The adhesive contains carefully selected ingredients, such as moisture-resistant polymers and additives, which ensure that the adhesive does not degrade or detach upon exposure to moisture. This makes the adhesive particularly suitable for use in spaces such as bathrooms, kitchens or commercial spaces where moisture plays a role.

In addition, the long open time of the adhesive contributes to efficient installation of floor covering on heated or cooled surfaces. The installer has sufficient time to position the floor covering accurately and to make any adjustments before the adhesive begins to cure. This is particularly important during the installation of large surfaces or complex patterns, such as with luxury vinyl tiles (LVT), homogeneous PVC floors or linoleum.

In an embodiment, the adhesive is used in several steps for bonding a floor covering and a substrate, depending on the substrate and/or the floor covering. A semi-wet bonding method is applied to absorbent substrates, wherein the adhesive is applied uniformly using a suitable notched trowel. It is important not to spread more adhesive than can be processed within the open time of 30 to 60 minutes. After a short waiting period of 10 to 25 minutes, the floor covering can be laid. When the adhesive ridge has dried superficially, the tack or bond strength will still be very low. It is therefore essential to thoroughly rub down the entire surface after laying the floor covering, so that the adhesive is evenly distributed over the backing of the covering and air entrapments are prevented. End edges, uneven seams and any deformations in the floor covering must be flattened or counter-rolled. In this way, a firm bond is achieved. 20 to 30 minutes after application, it is important to rub down the floor covering again, with extra attention to the seams and the edges.

In an embodiment with non-absorbent substrates, the contact bonding method is applied. The floor covering is laid wet and pressed down firmly. Subsequently, the floor covering is folded back and both the backing of the floor covering and the substrate must be allowed to air out for more than 20 minutes, until a liquid tack occurs, which can be tested with a fingertip test. After this process is completed, the floor covering can be laid again, rolled and pressed down firmly again to strengthen the bond.

The consumption of the adhesive depends on the type of floor covering and the structure of the backing. In an embodiment with a floor covering with a smooth backing, the consumption is between 150 g/m² and 300 g/m², preferably between 200 g/m² and 300 g/m², even more preferably between 200 g/m² and 150 g/m². In another embodiment with floor covering with an uneven backing, the consumption is between 200 g/m² and 350 g/m², more preferably between 250 g/m² and 350 g/m², even more preferably between 250 g/m² and 300 g/m². In yet another embodiment, with floor covering with a rough backing, the consumption is between 300 g/m² and 450 g/m², more preferably between 350 g/m² and 450 g/m², even more preferably between 350 g/m² and 400 g/m².

In a third aspect, the present invention relates to a kit comprising a composition as described above and at least one element selected from the group of a notched trowel, masking tape, a seam tape, a marking tool and one or more floor coverings. This kit offers an all-in-one solution for the professional and efficient installation of floors in diverse applications. By combining the high-quality adhesive composition with additional tools, the installation process is simplified, while the quality and durability of the bond are ensured.

The composition forms the core of the kit and provides the necessary adhesion properties, water resistance and flexibility. The supplementary elements in the kit each play a specific role in the installation process. The notched trowel ensures an even distribution of the adhesive over the substrate, which is essential for a consistent bond. Masking tape can be used to demarcate areas and prevent adhesive overflow, which is particularly important in precision work or decorative applications. A seam tape reinforces the connection between different strips of floor covering and increases the strength of the seams, making the installation resistant to intensive use and mechanical stress.

Optionally, the kit may be supplemented with other elements, such as gloves for safe working, a spatula for applying the adhesive in hard-to-reach corners, a finishing roller to press the floor covering firmly down, or a cleaning agent to remove excess adhesive. These additional components make the kit particularly suitable for both professional installers and do-it-yourselfers, with the emphasis on ease of use, reliability, and a high-quality end result. The versatility of the kit makes it possible to install floor coverings on various surfaces and in diverse situations efficiently and durably.

In what follows, the invention is described by means of non-limiting examples that illustrate the invention, and which are not intended or to be interpreted as limiting the scope of the invention.

### EXAMPLES

### EXAMPLE 1:

A floor adhesive was produced as follows with a composition as in Table 1.

**Table 1. Floor adhesive composition**

| **Ingredient** | **Quantity** |
|---|---|
| Bonding promoter (TEG) | 16.87 wt% |
| Adhesion promoter (acrylonitrile copolymer) | 38.5 wt% |
| Open time extender | 1.75 wt% |
| Glycerin | 0.47 wt% |
| Fungicide | 0.33 wt% |
| Filler (calcium and magnesium carbonate) | 33.16 wt% |
| Surfactant | 0.61 wt% |
| NaOH | 0.23 wt% |
| H20 | To 100% |

The floor adhesive from Table 1 was compared with floor adhesives having a different composition on a PVC floor covering, cork, and carpet.

In addition to the floor adhesive as described in Table 1, alternative compositions were produced to investigate the influence of both different quantities and different ingredients. These alternative compositions are shown in Table 2.

**Table 2. Alternative floor adhesive compositions**

| **Ingredient** | **Composition A (wt%)** | **Composition B (wt%)** |
|---|---|---|
| Bonding promoter (TEG) | 14.0 | Polyethylene glycol 15.5 |
| Adhesion promoter (acrylonitrile copolymer) | 40.0 | Styrene-acrylate polymer 36.0 |
| Open time extender | 1.0 | 2.0 |
| Glycerin | 0.3 | 0.5 |
| Fungicide | 0.25 | 0.4 |
| Filler (calcium and magnesium carbonate) | 33.0 | Aluminum trihydrate 32.0 |
| Surfactant | 0.75 | 0.5 |
| NaOH | 0.2 | 0.3 |
| H₂O | To 100% | To 100% |

The performance of the various compositions was tested on PVC floor covering, cork, and carpet, wherein parameters such as bond strength, open time, and moisture resistance were measured. The results are shown in Table 3.

**Table 3. Comparison of adhesive performance**

| **Parameter** | **Original composition (Table 1)** | **Composition A** | **Composition B** |
|---|---|---|---|
| Bond strength on PVC (N/mm²) | 80 | 70 | 75 |
| Bond strength on cork (N/mm²) | 50 | 45 | 42 |
| Bond strength on carpet (N/mm²) | 90 | 85 | 88 |
| Open time (minutes) | 40 | 15 | 45 |
| Moisture resistance after 48 hours | No delamination | Slight delamination | Moderate delamination |

The composition in Table 1 outperformed both Composition A and Composition B on multiple parameters. The higher concentration of the bonding promoter (TEG) in Table 1 provided a stronger adhesion on both PVC and cork, while the use of acrylonitrile copolymer as adhesion promoter enabled exceptional compatibility with various substrates.

Composition A, wherein the amounts of the bonding promoter and adhesion promoter were reduced, exhibited a reduced bond strength and a shorter open time. This suggests that a lower proportion of TEG negatively affects the balance between adhesion and working time.

Composition B, comprising a replacement of the adhesion promoter by a styrene-acrylate polymer and an alternative filler, resulted in an improved open time, but with a loss of moisture resistance and bond strength on cork and PVC. The properties of the styrene-acrylate polymer used were less effective in handling varying moisture and temperature conditions.

These equations emphasize the superior balance between bond strength, open time, and moisture resistance achieved with the composition in Table 1. This makes the original floor adhesive better suited for diverse applications, including those with demanding moisture and substrate conditions.

## Claims

1. An adhesive for bonding a floor covering to a substrate, the adhesive comprising:
one or more bonding promoters, comprising a triethylene glycol-esterified rosin resin, in a concentration between 10 wt% and 30 wt%;
one or more adhesion promoters, comprising an acrylonitrile copolymer, in a concentration between 20 wt% and 50 wt%; and
one or more open time extenders in a concentration between 1 wt% and 5 wt%,
wherein the floor adhesive, when applied to a substrate in a thickness of 0.1 mm to 2 mm, has an open time at 23°C and 50% relative humidity between 30 minutes and 60 minutes, measured according to EN 14293.

2. The adhesive according to any one of the preceding claims, wherein the curing of the adhesive has a VOC emission between 0 g/L and 100 g/L, more preferably 0 g/L and 50 g/L, measured according to ISO 16000-9.

3. The adhesive according to any one of the preceding claims, **characterized in that** the composition comprises glycerin in a concentration between 0 wt% and 1 wt%.

4. The adhesive according to any one of the preceding claims, **characterized in that** the composition comprises a mixture of fungicides in a concentration between 0.1 wt% and 0.5 wt%, wherein the mixture of fungicides comprises at least 1,2-benzisothiazole-3(2H)-one, 5-chloro-2-methyl-2H-isothiazole-3-one and 2-methyl-2H-isothiazole-3-one in a ratio of 100:1:1.

5. The adhesive according to any one of the preceding claims, **characterized in that** the composition comprises sodium polyacrylate in a concentration between 0 wt% and 1 wt%.

6. The adhesive according to any one of the preceding claims, **characterized in that** the composition comprises a mixture of calcium and magnesium carbonate in a concentration between 30 wt% and 40 wt%.

7. The adhesive according to any one of the preceding claims, **characterized in that** the composition comprises a surfactant in a concentration between 0 wt% and 1 wt%.

8. The adhesive according to any one of the preceding claims, **characterized in that** the composition comprises NaOH in a concentration sufficient for a pH between 7 and 8.

9. The adhesive according to any one of the preceding claims, **characterized in that** the floor adhesive has a density between 1 g/ml and 1.5 g/ml.

10. The adhesive according to any one of the preceding claims, **characterized in that** the floor adhesive is suitable for absorbent and non-absorbent substrates.

11. Use of the adhesive according to any one of claims 1 to 11 for bonding horizontal flexible floor coverings.

12. Use of the adhesive according to claim 12 for bonding luxury vinyl tiles (LVT), semi-rigid vinyl floor tiles, homogeneous and/or heterogeneous PVC floor coverings, linoleum, carpet and/or cork.

13. Use of the adhesive according to claim 12 or 13 on floors with underfloor heating and/or floor cooling.

14. A kit comprising a universal floor adhesive according to any one of claims 1 to 11, a notched trowel, masking tape and/or a seam tape.

15. The kit according to claim 15, comprising a floor covering.
